Europäisches Patentamt

European Patent Office

Office européen des brevets

(19)

(11) Numéro de publication : **0 019 496**
**B1**

## FASCICULE DE BREVET EUROPÉEN

(12)

(45) Date de publication du fascicule du brevet :
**07.08.85**

(21) Numéro de dépôt : **80400479.4**

(22) Date de dépôt : **10.04.80**

(51) Int. Cl.⁴ : **F 16 K 1/22, F 16 K 27/02**

(54) **Vanne-papillon et procédé de fabrication s'y rapportant.**

(30) Priorité : **04.05.79 FR 7911275**

(43) Date de publication de la demande :
**26.11.80 Bulletin 80/24**

(45) Mention de la délivrance du brevet :
**07.08.85 Bulletin 85/32**

(84) Etats contractants désignés :
**BE CH DE GB IT LI SE**

(56) Documents cités :
**EP-A- 0 017 583**
**DE-A- 2 452 034**
**DE-B- 1 214 496**
**FR-A- 1 327 181**
**US-A- 3 000 609**
**US-A- 3 069 128**
**US-A- 3 081 791**
**US-A- 3 127 904**
**US-A- 3 290 001**
**US-A- 3 423 066**
**US-A- 3 565 395**
**US-A- 3 601 364**
**US-E- 27 570**

(73) Titulaire : **Gachot, Jean**
**26 bis, avenue de Paris**
**F-95230 Soisy sous Montmorency (FR)**

(72) Inventeur : **Gachot, Jean**
**26 bis, avenue de Paris**
**F-95230 Soisy sous Montmorency (FR)**

(74) Mandataire : **Bouju, André**
**38 Avenue de la Grande Armée**
**F-75017 Paris (FR)**

Jouve, 18, rue St-Denis, 75001 Paris, France

## Description

La présente invention concerne une vanne papillon du genre défini dans le préambule de la revendication 1.

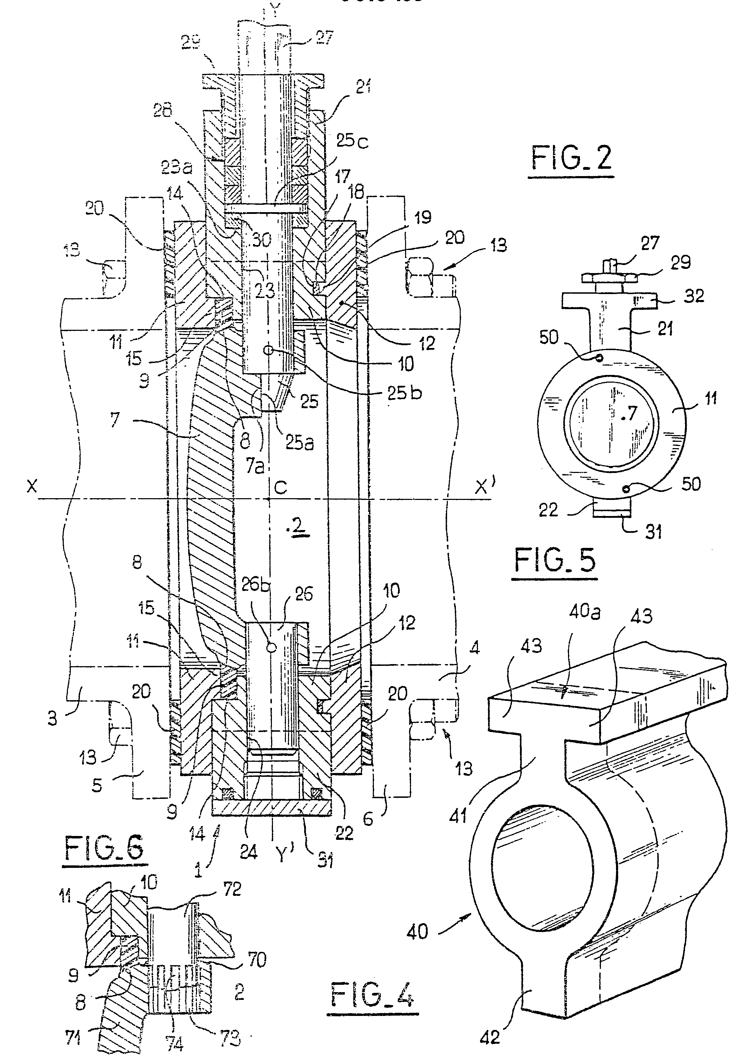

Une vanne ayant une telle structure est décrite à la figure 5 du US-A-3 290 001. Le corps de la vanne décrite dans ce document est relativement massif et lourd car il doit présenter une surface d'appui importante contre la bride opposée à la bague d'appui. Dans cette vanne, la bague d'appui est radialement plus épaisse que le corps, mais comme le montre la réalisation de la figure 3, cela aurait pu être l'inverse sans que les avantages et les inconvénients de la vanne soient affectés. Dans la réalisation de la figure 3, la vanne comporte deux bagues d'appui symétriques, chacune maintenant un siège, le papillon passant de l'un à l'autre siège par rotation de 180°.

Le but de l'invention est ainsi de proposer une vanne du genre indiqué au début pouvant être insérée entre deux parties de tuyauterie et présentant dans les deux cas des avantages de légèreté et de facilité de montage.

Ce but est atteint par les moyens énoncés dans la partie caractérisante de la revendication 1.

Grâce à la seconde bague d'appui prévue du côté opposé au siège, la couronne peut être relativement mince. La légèreté du corps est optimisée sans avoir recours à des formes complexes renchérissant la fabrication. Bien au contraire les constituants du corps sont particulièrement simples à obtenir. La vanne peut être insérée telle quelle entre deux parties de tuyauterie.

Par leur diamètre relativement important, les deux bagues d'appui assurent un appui stable sur les brides et permettent le centrage de l'ensemble de corps.

L'invention se distingue nettement du US-A-3 290 001. En effet, selon ce document, lorsqu'il est prévu une bague à chaque extrémité du corps, c'est la couronne qui est plus épaisse radialement que les bagues, de sorte que l'ensemble atteint un poids considérable.

Des modes particuliers de réalisation de l'invention apparaissent dans les revendications dépendantes.

L'invention vise également un procédé de fabrication de la vanne selon l'invention.

Suivant cet aspect de l'invention, en vue de réaliser, notamment en série industrielle, le corps, on procède aux étapes suivantes :

·on part d'un profilé tubulaire portant deux ailes diamétralement opposées, l'épaisseur de l'une au moins de ces ailes étant supérieure au diamètre de l'arbre assurant la rotation de l'obturateur ;

on découpe dans ce profilé un tronçon d'épaisseur correspondant à celle de la couronne centrale du corps ;

on pratique dans les ailes de ce profilé deux alésages alignés destinés à recevoir respectivement un arbre de commande et un pivot pour le papillon.

Ce procédé de fabrication, particulièrement économique, évite la fabrication par forgeage ou moulage d'une ébauche de la couronne centrale.

D'autres particularités et avantages de la présente invention ressortiront encore de la description ci-après.

Aux dessins annexés, donnés à titre d'exemples non limitatifs :

la Figure 1 est une vue d'une vanne conforme à l'invention, insérée entre deux brides de deux parties d'une tuyauterie,

la Figure 2 est une vue de la vanne de la Figure 1, en coupe selon un plan parallèle à la direction de l'écoulement et passant par l'axe de rotation de l'obturateur,

la Figure 3 est une demi-vue de la vanne des Figures 1 et 2, en coupe partielle selon un plan parallèle à la direction de l'écoulement et passant par l'axe de l'un des boulons de serrage des brides, l'arbre et le pivot de l'obturateur étant démontés,

la Figure 4 est une vue du profilé destiné à la fabrication du corps,

la Figure 5 est une vue de face à petite échelle d'une variante d'exécution de la vanne,

la Figure 6 est une vue d'une variante.

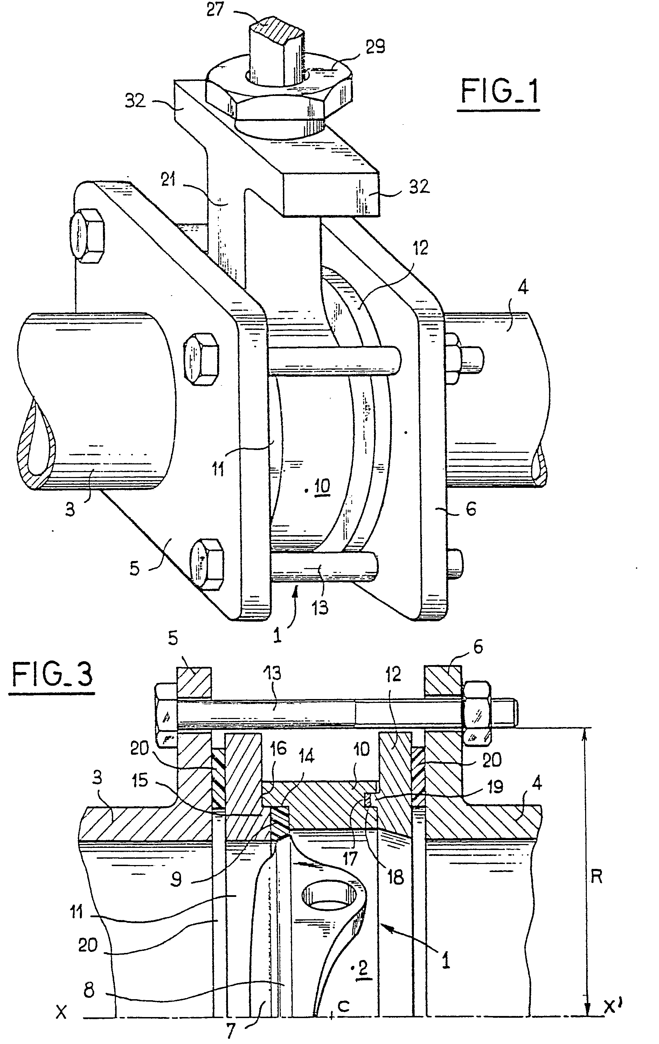

Dans la réalisation des figures 1 à 3, la vanne-papillon comprend un corps 1 traversé par un conduit 2 (figures 2 et 3), disposé en regard de deux parties 3, 4 de la tuyauterie, terminée par des brides 5, 6.

Cette vanne comprend encore un obturateur 7 monté en rotation dans le conduit 2 autour d'un axe YY', et déporté latéralement par rapport à cet axe qui est transversal à l'axe XX' du conduit 2.

L'obturateur 7 comprend, à sa périphérie, une portée annulaire 8 constituée par une zone sphérique centrée au point C d'intersection des axes XX' et YY'. La portée annulaire 8 est destinée à prendre appui, en position de fermeture de l'obturateur 7 (représentée aux figures 2 et 3), sur un siège 9 maintenu en saillie dans le conduit 2, comme on l'expose en détail plus loin.

La partie centrale du corps 1 de la vanne est essentiellement constituée par une couronne 10 (figures 1 et 3 notamment).

Conformément à l'invention, la couronne 10, dont la paroi est relativement mince (figure 3), est épaulée par deux bagues d'appui 11, 12 aplaties constituant en service les deux parties terminales du corps 1.

Les bagues 11, 12 sont serrées, en même temps que la couronne 10, entre les brides 5 et 6 de la tuyauterie par les boulons 13 qui tendent à rapprocher ces deux brides l'une de l'autre, et qui seuls assurent l'appui de ces bagues 11, 12 contre la couronne 10.

Le siège 9 est monté dans un dégagement annulaire 14 pratiqué à l'une des extrémités de la couronne 10. La bague 11 adjacente présente, à proximité de son ouverture constituant une partie du conduit 2, une collerette 15 emboîtée dans le dégagement 14, assurant le positionnement précis de la couronne 10 par rapport à la bague 11. En service, la bague 11 est, en dehors de la collerette 15, en appui sur la surface non dégagée 16 (Figure 3) de cette extrémité de la couronne 10. Cet appui étant réalisé, la dimension axiale de la collerette 15 est prévue pour assurer un maintien axial favorable du siège 9, ainsi que l'étanchéité par le siège 9 entre la couronne 10 et la bague 11.

Le siège 9 ainsi monté entre la couronne 10 et la bague 11 ne nécessite pas de dispositif de maintien spécial, et, en outre, dispense de prévoir un système d'étanchéité supplémentaire entre la couronne 10 et cette bague 11.

A son autre extrémité, la couronne 10 présente une rainure annulaire 17 dont le fond est garni d'un joint 18, et dans laquelle est emboîtée une saillie annulaire 19 de la bague 12. Cette saillie 19 assure une compression étanche du joint 18 quand la bague 12 est, en dehors de sa rainure 17, en appui sur la surface terminale de la couronne 10.

En outre, la position de la couronne 10 par rapport à la bague 12 est ainsi bien déterminée.

Entre chaque bague 11, 12 et la bride 5, 6 adjacente est interposé un joint plat 20.

Le diamètre extérieur des bagues 11, 12 est supérieur à celui de la couronne 10 (Figures 1 et 3), et est voisin de la distance libre R (Figure 3) séparant chaque tige de boulon 13 de l'axe XX' du conduit 2.

Ainsi, le centrage de la vanne sur le conduit 2 est réalisé dès lors que les boulons 13 sont en place autour de la vanne.

La couronne 10 porte deux cheminées 21, 22 (Figure 2) transversales au conduit 2, diamétralement opposées, dans lesquelles sont pratiqués des alésages respectifs 23, 24 (Figure 2) coaxiaux à l'axe YY' et traversés respectivement par un arbre de commande 25 et un pivot 26, tous deux, de préférence de même diamètre, assurant la rotation de l'obturateur 7 autour de l'axe YY'.

L'arbre 25, monté dans une oreille de l'obturateur 7, est rendu solidaire en rotation de ce dernier, au moyen d'un méplat 25a pratiqué à l'une des extrémités de cet arbre 25, et coopérant avec une saillie 7a correspondante de l'obturateur 7. L'obturateur 7 est, en outre, bloqué en translation sur l'arbre 25 au moyen d'une goupille 25b traversant l'oreille précitée et l'arbre 25.

L'autre extrémité de l'arbre 25 est terminée par un carré ou un méplat 27 destiné à rendre l'arbre 25 solidaire d'une poignée de commande (non représentée).

L'alésage 23, dont le diamètre est très voisin de celui de l'arbre 25 à proximité du conduit 2, est ensuite élargi au moyen d'un épaulement 23a pour contenir un système presse-étoupe 28. Un écrou 29 de presse-étoupe est engagé dans l'extrémité taraudée de l'alésage 23 débouchant à l'extérieur de la vanne.

L'arbre 25 porte une collerette 25c immobilisée en translation entre une rondelle 30 en appui sur l'épaulement 23a et la garniture du presse-étoupe 28 sollicitée vers cet épaulement par l'écrou 29. La collerette 25c assure le positionnement en translation de l'arbre 25 dans l'alésage 23 et coopère avec la goupille 25a pour positionner l'obturateur 7 dans le conduit 2.

La cheminée 21 est terminée par deux ailettes 32 (Figure 1) disposées transversalement aux axes XX' et YY', servant à fixer divers dispositifs tels que, par exemple, des butées et/ou des crans d'arrêt échelonnés (non représentés) destinés à coopérer avec la poignée de manœuvre pour définir des positions extrêmes ou intermédiaires d'ouverture de la vanne.

Le pivot 26 est engagé dans une seconde oreille de l'obturateur 7, et rendu solidaire en translation de cet obturateur 7 par brochage au moyen d'une goupille 26b traversant la bague et le pivot 26.

L'alésage 24 est fermé par un couvercle étanche 31.

La vanne ainsi constituée est particulièrement légère. Son centrage simple et efficace et le montage de son siège 9 par simple emboîtement la rendent très économique.

Dans une variante de l'invention représentée à la Figure 5, deux vis 50 traversent la bague 11 à proximité de sa périphérie et sont vissées respectivement dans les cheminées 21 et 22, de préférence sur le bord de ces dernières, pour éviter que les vis 50 pénètrent dans les alésages 23, 24.

La bague 12 (non visible sur la Figure 5) est fixée de la même manière de l'autre côté des cheminées 21, 22.

On assure ainsi la cohésion de la vanne avant le montage, ce qui facilite sa manutention et son stockage.

La vanne conforme à l'invention peut être réalisée selon des procédés nombreux et variés.

Dans le cadre de l'invention, on préfère, toutefois, appliquer le procédé ci-après qui vise plus particulièrement la fabrication de la couronne 10.

Suivant ce procédé, on part d'un profilé extrudé tubulaire 40 (Figure 4) portant deux ailes 41, 42 diamétralement opposées. La largeur de l'aile 41 est supérieure au diamètre de l'alésage 23 mesuré au niveau du presse-étoupe 28, tandis que la largeur de l'aile 42 est supérieure au diamètre du pivot 26. En outre, l'aile 41 du profilé est terminée par deux ailettes 43 s'étendant dans des directions opposées, perpendiculairement à l'aile 41.

On découpe dans ce profilé 40 un tronçon 40a (délimité par un pointillé sur la Figure 4) ayant l'épaisseur voulue pour la couronne 10, pour constituer une ébauche de la couronne 10.

On procède ensuite sur ce tronçon 40a, notamment, à l'usinage des alésages 23 et 24 respectivement dans les tronçons d'ailes 41 et 42 qui constituent les cheminées 21 et 22, ainsi qu'à l'usinage du dégagement 14 et de la rainure 17.

On taraude l'embouchure des alésages 23, 24 pour permettre le montage de l'écrou 29 et du couvercle 31.

Ce procédé, faisant appel à l'extrusion d'un profilé, est particulièrement économique dans le cadre d'une fabrication en grande série, et renforce donc les avantages d'économie propres à la constitution de la vanne.

D'autre part, les boulons 13 peuvent être remplacés par des tirants comprenant une tige filetée à ses deux extrémités associées chacune à un écrou de serrage.

En vue de faciliter le positionnement du joint 20, on peut encore prévoir, sur la face des bagues 11, 12 tournée vers les brides 5, 6, une saillie et/ou un évidement annulaires, ou encore des saillies de petites dimensions réparties selon un cercle correspondant au diamètre extérieur ou intérieur du joint 20.

On peut encore adapter à la vanne conforme à l'invention certains des perfectionnements prévus dans EP-A-17 583, publié le 15.10.80, au nom du même Demandeur. C'est ainsi notamment que, comme le montre partiellement la figure 6 en coupe suivant un plan passant par l'axe d'écoulement XX', la surface 70 des oreilles de l'obturateur 71 tournée vers la paroi du conduit 2 peut être sphérique, et appartenir à la même sphère centrée en C que la portée 8 de l'obturateur 71. En outre, l'obturateur 71 peut être rendu solidaire de l'arbre de commande 72 (représenté avec arrachement dans l'oreille) par des cannelures 73 pratiquées à la surface interne de l'orifice de l'oreille dans laquelle est engagé l'arbre 72, et par des cannelures correspondantes 74 pratiquées sur la surface en regard de l'arbre 72.

Cet agencement permet de cumuler les avantages de précision obtenus pour le corps conformément à l'invention avec le gain de précision inhérent à la structure décrite dans EP-A-17 583.

**Revendications**

1. Vanne papillon, destinée à être insérée entre deux brides (5, 6) de tuyauterie (3, 4), cette vanne comprenant un ensemble de corps (1) serré par des boulons-tirants (13) et traversé par un conduit (2) destiné à venir en regard des deux brides (5, 6) de tuyauterie (3, 4), et un disque obturateur (7) monté dans l'ensemble de corps (1) et déporté latéralement relativement à son axe de rotation (YY') qui est transversal au conduit (2), le disque obturateur (7) présentant à sa périphérie une portée annulaire (8) destinée à prendre appui sur un siège (9) disposé dans le conduit (2), l'ensemble de corps (1) comprenant une couronne (10) présentant au moins une cheminée (21) transversale au conduit et dans laquelle est monté en rotation un arbre (25) assurant le pivotement du disque obturateur (7), le siège (9) étant monté dans un dégagement annulaire (14) de la couronne (10) entre une face de ce dégagement et une collerette (15) emboîtée dans le dégagement et portée par une première bague d'appui aplatie (11, 61) radialement plus épaisse que la couronne (10) et épaulant cette dernière, caractérisée en ce que du côté opposé au siège (9), la couronne (10) est épaulée par une seconde bague d'appui (12, 62), également aplatie et plus épaisse radialement que la couronne (10), et reliée à la couronne par des moyens de centrage (17, 19) et d'étanchéité (18), et en ce que les deux bagues d'appui (11, 12) constituent en service les deux parties terminales de l'ensemble de corps de vanne (1).

2. Vanne papillon conforme à la revendication 1, caractérisée en ce que le siège (9) est inséré de façon étanche entre la couronne (10) et la première bague (11, 61).

3. Vanne conforme à l'une des revendications 1 ou 2, caractérisée en ce que sur sa face adjacente à la seconde bague (12, 62), la couronne présente une rainure annulaire (17) dans laquelle est emboîtée, avec interposition d'un joint d'étanchéité (18), une saillie annulaire (19) portée par la seconde bague (12, 62).

4. Vanne conforme à l'une des revendications 1 à 3, caractérisée en ce que les deux bagues d'appui (11, 12) ont un diamètre extérieur voisin de la distance libre entre la tige de chaque boulon (13) et l'axe du conduit (XX').

5. Procédé pour fabriquer la couronne (10) d'une vanne-papillon conforme à l'une des revendications 1 à 4, caractérisé en ce qu'on procède aux étapes suivantes :

a) on part d'un profilé tubulaire (40) portant deux ailes diamétralement opposées (41, 42), l'épaisseur de l'une au moins de ces ailes (41) étant supérieure au diamètre de l'arbre (25) assurant la rotation de l'obturateur (7) ;

b) on découpe dans ce profilé un tronçon (40a) d'épaisseur correspondant à celle de la couronne centrale (10) du corps (1) ;

c) on pratique dans les ailes (41, 42) de ce profilé (40) deux alésages alignés (23, 24), destinés à recevoir respectivement l'arbre de commande (25) et un pivot (26) pour l'obturateur (7).

**Claims**

1. Butterfly valve which is intended to be inserted between two flanges (5, 6) of a piping system (3, 4), this valve comprising a valve-body assembly (1) clamped by means of tie-bolts (13) and traversed by a passageway (2) which is intended to be located opposite to the two flanges (5, 6) of the piping system (3, 4) and a closure disk (7) mounted within the valve-body assembly (1) and displaced laterally with respect to its axis of rotation (Y-Y') which is transverse to the passageway (2), the closure disk (7) being provided at its periphery with an annular bearing surface (8) which is intended to bear on a valve-seat (9) placed within the passageway (2), the valve-body assembly (1) comprising an annular member (10) provided with at least one chimney (21) which is located transversely with respect to the passageway and within which is rotatably mounted a shaft (25) for producing a pivotal displacement of the closure disk (7), the valve-seat (9) being mounted within an annular recess (14) of the annular member (10) between one face of this recess and an annular flange (15) which is inserted within the recess and carried by a first flattened bearing ring (11, 61) having a greater radial thickness than the annular member (10) and providing a support for this latter, characterized in that, on the side opposite to the valve-seat (9), the annular member (10) is supported by a second bearing ring (12, 62) which is also flattened and has a greater radial thickness than the annular member (10) and is coupled to the annular member by centering means (17, 19) and sealing means (18) and that the two bearing rings (11, 12) constitute in service the two end portions of the valve-body assembly (1).

2. Butterfly valve in accordance with claim 1, characterized in that the valve-seat (9) is inserted in fluid-tight manner between the annular member (10) and the first ring (11, 61).

3. Valve in accordance with either of claims 1 or 2, characterized in that the annular member is provided on that face which is adjacent to the second ring (12, 62) with an annular groove (17) in which is fitted, with interposition of a seal (18), an annular projecting portion (19) carried by the second ring (12, 62).

4. Valve in accordance with any one of claims 1 to 3, characterized in that the two bearing rings (11, 12) have an external diameter which is close in value to the free distance between the stem of each bolt (13) and the axis of the passageway (X-X').

5. Method for manufacturing the annular member (10) of a butterfly valve in accordance with one of claims 1 to 4, characterized in that the method involves the following steps :

a) there is initially employed a tubular structural shape (40) provided with two diametrically opposite wings (41, 42), the thickness of at least one of these wings (41) being greater than the diameter of the shaft (25) which serves to rotate the closure disk (7) ;

b) there is cut from this structural shape a segment (40a) having a thickness corresponding to that of the central annular member (10) of the valve body (1) ;

c) there are formed in the wings (41, 42) of this structural shape (40) two aligned bores (23, 24) which are intended to receive respectively the operating shaft (25) and a pivot (26) for the closure disk (7).

**Patentansprüche**

1. Drehschieber zur Einfügung zwischen zwei Flansche (5, 6) einer Rohrleitung (3, 4), wobei dieser Schieber eine durch Spannschrauben (13) eingespannte Körpereinheit (1) umfaßt, die von einer Leitung (2) durchquert wird, welche dazu bestimmt ist, den beiden Flanschen (5, 6) der Rohrleitung (3, 4) gegenüber angeordnet zu werden, und eine Verschlußklappe (7) umfaßt, die in der Körpereinheit (1) montiert und seitlich relativ zu ihrer Drehachse (YY') versetzt ist, welche transversal zur Leitung (2) verläuft, wobei die Verschlußklappe (7) an ihrem Umfang eine ringförmige Anlage (8) aufweist, die dazu bestimmt ist, sich auf einem in der Leitung (2) angeordneten Sitz (9) abzustützen, wobei ferner die Körpereinheit (1) einen Kranz (10) umfaßt, der wenigstens einen zur Leitung transversalen Schacht (21) aufweist und worin eine Welle (25) drehbar gelagert ist, welche die Verschwenkung der Verschlußklappe (7) gewährleistet, wobei ferner der Sitz (9) in einer ringförmigen Aussparung (14) des Kranzes (10) zwischen einer Fläche dieser Aussparung und einem Kragen (15) eingebaut ist, der in die Aussparung eingesetzt ist und von einem ersten abgeflachten Stützring (11, 61) getragen wird, welcher radial eine größere Dicke als der Kranz (10) aufweist und diesen stützt, dadurch gekennzeichnet, daß der Kranz (10) auf der dem Sitz (9) gegenüberliegenden Seite durch einen zweiten Stützring (12, 62) gestützt wird, der ebenfalls abgeflacht und radial dicker ist als der Kranz (10) sowie an den Kranz über Zentriermittel (17, 19) und Dichtungsmittel (18) anschließt, und daß die zwei Stützringe (11, 12) im Betrieb die beiden Endteile der Körpereinheit des Schiebers (1) bilden.

2. Drehschieber nach Anspruch 1, dadurch gekennzeichnet, daß der Sitz (9) unter Abdichtung zwischen den Kranz (10) und den ersten Ring (11, 61) eingefügt ist.

3. Schieber nach Anspruch 1 oder 2, dadurch gekennzeichnet, daß der Kranz auf seiner an den zweiten Ring (12, 62) angrenzenden Fläche eine Ringnut (17) aufweist, in die unter Zwischenfügung einer Dichtung (18) ein ringförmiger Vorsprung (19) eingesetzt ist, den der zweite Ring (12, 62) trägt.

4. Schieber nach einem der Ansprüche 1 bis 3, dadurch gekennzeichnet, daß die zwei Stützringe (11, 12) einen Außendurchmesser aufweisen, der ungefähr gleich dem freien Abstand zwischen dem Schaft jeder Schraube (13) und der Achse der Leitung (XX') ist.

5. Verfahren zur Herstellung des Kranzes (10) eines Drehschiebers nach einem der Ansprüche 1 bis 4, dadurch gekennzeichnet, daß folgende Schritte ausgeführt werden :

a) man geht aus von einem Rohrprofil (40), welches zwei diametral einander gegenüberliegende Flügel (41, 42) trägt, wobei die Dicke wenigstens einer dieser Flügel (41) größer ist als der Durchmesser der Welle (25), welche die Drehung des Verschlußgliedes (7) gewährleistet ;

b) von diesem Profilteil wird ein Abschnitt (40a) abgeschnitten, dessen Dicke derjenigen des zentralen Kranzes (10) des Körpers (1) entspricht ;

c) in den Flügeln (41, 42) dieses Profilteils (40) werden zwei fluchtende Bohrungen (23, 24) angebracht, die dazu bestimmt sind, die Steuerwelle (25) bzw. einen Schwenkzapfen (26) für das Verschlußglied (7) aufzunehmen.

FIG_1

FIG_3

0 019 496

FIG_2

FIG_5

FIG_6

FIG_4